# EUROPEAN PATENT SPECIFICATION

(11) **EP 0 784 269 B1**
(45) Date of publication and mention of the grant of the patent: **06.05.1999**
(21) Application number: 96309361.2
(22) Date of filing: 20.12.1996
(51) Int. Cl.: G06F 9/46

(54) **Processing event data**
Ereignisdatenverarbeitung
Traitement de données d'événement

(30) Priority: 09.01.1996 GB 9600383
(43) Date of publication of application: 16.07.1997
(73) Proprietor: NOKIA MOBILE PHONES LTD., 24101 Salo (FI)
(72) Inventor: Turtinen, Matti, Jakkukyla (FI); Turunen, Jari, 90160 Oulu (FI); Ziegler, Jurgen, 02710 Espoo (FI)
(74) Representative: Atkinson, Ralph

(56) References cited:
- EP-A- 0 528 222
- WO-A-95/31781
- IBM TECHNICAL DISCLOSURE BULLETIN, vol. 35, no. 1b, June 1992, ARMONK, NY, US, pages 260-262, XP000309054 "COLLATED KEYED QUEUE"

## Description

The present invention relates to processing events data, wherein said data is buffered and sequentially processed by a plurality of sub-processes.

The provision of computing resources in goods such as telephones, ovens, photocopiers and radios etc has become known, particularly by software development engineers, as "embedded control". Such an approach aims, amongst other things, to provide improved functionality while facilitating the provision of enhanced user interfaces.

Typically, a manufacturer would choose a family of microcontroller integrated circuits from a particular semi-conductor manufacturer and then only use these circuits in a particular range of products. This approach ensures that circuit development systems and skilled personnel are not unnecessarily duplicated for different microcontrollers. Thus, within most development environments, there is a strong drive towards maintaining skills and solutions that may be directed towards developing new product variations efficiently.

Microcontrollers integrate main features of a microcomputer onto a single chip die. These components include a processor, with some static memory and usually some read-only memory for program storage, a programmable timer (essential for generating interrupts within a pre-emptive multi-tasking environment) and input and output ports. Input ports and output ports use registers to which data may be written to and read from, having connections to pins of the microcontroller package. In a typical eight bit microcontroller, such as the Hitachi H8 series, a plurality of input/output ports exist. Each of the eight pins of a particular port may be designated separately as being an input port or as an output port. Thus, when the memory location of a port is read, signals supplied to pins configured as inputs will be readable as input data and multi-bit data written to a designated output port will appear as high or low voltages on the associated pins of that port. Each port has an associated control register and configuration of a port is achieved by writing an appropriate bit pattern to its respective control register.

Most eight-bit microcontroller integrated circuits, such as the aforesaid Hitachi H8, are available in a variety of packages, most having a large number of pins. Thus, a large number of these pins may be dedicated to receiving or sending signals to peripheral circuitry, such as switches etc. Typical Hitachi H8 variants include the H8/323 having 3K bytes of intemal ROM, 256 bytes of RAM and operable at a speed of between one to five million instructions per second. The device includes fifty-three configurable input/output pins, four external vectored interrupt sources, seventeen intemal vectored interrupt sources, serial ports and timers etc. A similar device is the H8/3042 having 64K bytes of intemal ROM, 2K bytes of RAM, 70 configurable inputs/output pins, a ten bit analog to digital converter, an eight bit digital to analog converter, a two channel serial port, timers, an external dynamic RAM controller, seven external interrupt sources and thirty internal interrupt sources. However, it should be appreciated that these two examples are two taken from many different variants and many other configurations exist. Similarly, alternative configurations are provided by alternative manufacturers.

A manufacturer of an end-user product will choose an optimum microcontroller platform, essentially depending upon trade-offs between the requirements of particular products within a product range. For example, choosing a larger ROM size for a product containing a larger number of software features will tend to unnecessarily increase the cost of the lower range products that do not require these features. However, the optimum choice should allow the same platform to be used within many products, thereby allowing changes to be made between products within the range by making modifications to the embedded software, while minimising hardware re-design.

When a manufacturer has chosen a particular range of microcontrollers on which to base future products, a library of instructions may be built up over time, so that as each new product is developed, it is not necessary to rewrite each individual line of control instructions. The library will usually include an operating system or some simple task control software, from which other routines from the library may be controlled in order to interface with the hardware to which the microcontroller is connected. The library may be developed from source code created in a plurality of languages. Typically, most instructions of this type in now written in C or C++ in order to improve legibility and ease of reuse. Most microcontroller manufacturers provide a C compiler or ensure that an appropriate compiler is obtainable from a third party supplier.

After the operation of the new product has been defined, it is then necessary to translate this functional description into executable instructions that will reside in the microcontroller's ROM. As part of this process, tasks may be divided into the modification of instructions from an already existing library and the development of routines that will have to be created from new. Members of the team will then be assigned specific tasks, whereafter it is necessary to combine the software components (the old with the new) in a process that is often referred to as a "build".

A build comprises the combination, by a linker and a compiler, of precompiled and possibly uncompiled source code into the final "object file" for downloading onto the operational platform. At this stage, when all the components are brought together, problems of incompatibility may become apparent. Problems of incompatibility become significantly worse when a standard hardware platform is required to execute many different sets of instructions, providing different functionality for different products identified within the product range.

To assist in the development of different sets of embedded instructions within a common hardware platform, it is known to make use of compiler switches, arranged to instruct a compiler to compile source code differently according to a defined set of conditions. However, the complexity inherent in the use of compiler switches increases the time and effort required to get the instructions to run correctly and adds to the overall lead time before product release.

Compiler switches are mechanisms by which a programmer attempts to ensure that a function or group of functions may work in a variety of different contexts. In effect, a similar function is written several times and the appropriate version is selected when compilation takes place. This introduces two significant problems. Firstly, the programmer must anticipate the likely environments in which the function will be required to operate. This places an additional burden on the programmers which will in turn lead to delays prior to actually embarking upon the project. Secondly, the very nature of using compiler switches results in the programmer being forced to write similar functions many times so that the function required for a particular application may be selected during the compilation process.

A system for distributing event data within an operating system, in which data is buffered and sequentially processed, is described in International Patent Publication WO 95/31781 filed in the name of Apple Computer Inc. The arrangement disclosed requires an underlying operating system and would not be suitable for the environment proposed by the present application. A call is made to an event manager for event consumer software to be installed and thereafter the program effectively enters a wait state, awaiting the occurrence of its appropriate event. If such an approach were adopted in the present application, this would result in total lock out and is only meaningful when it is understood that this wait state is continually being interrupted by the operating system. Two types of consumer are illustrated, consisting of broadcast consumers and sequential consumers. Interests events for relevant sequential consumers are recorded within a sequential consumer database.

An event from an event producer is identified by the event manager control unit which in tum refers to the sequential consumer database to identify sequential consumers that have registered an interest in receiving the event. The event is then supplied to the first sequential consumer identified by the database which retains exclusive use of that event data. After effecting its consumption process, the event data is returned to the event manager control unit while directing to the next sequential consumer unit identified by the sequential database. This process continues until all registered sequential consumers have sequentially received the event data. Thereafter, the event is supplied to all of the broadcast consumers.

The order in which data is supplied to the event manager control unit is determined by scheduling procedures of the underlying operating system. Consequently, the event manager control unit will attend to each event in a purely sequential way such that, where a particular event, all sequential consumers that have recorded an interest in receiving event data, by means of the sequential consumer database, will receive that event data before the next event data is considered. Such an arrangement would not be appropriate for the present application where a more sophisticated level of control is required in order to provide pseudo-concurrency within a real time embedded environment.

According to a first aspect of the present invention, there is provided a method of processing event data, wherein said data is buffered and sequentially processed by a plurality of sub-processes; characterized by defining a plurality of prioritized queues, defining which input event data is supplied to which of said prioritized queues and defining which prioritized sub-processes receive outputs from said queues; examining said queues to identify the highest priority queue with buffered event data therein; supplying said identified event data to the highest priority sub-process; returning a consumption policy from said process identifying whether said supplied event data may be re-supplied to the next prioritised sub-process; and re-examining said queues so as to process a higher priority event or to continue processing said previously supplied event.

An advantage of said first aspect of the present invention is that it allows operations within the microcontroller to be considered as being event driven. In real-time systems, software may be considered as being split up into functions, each of which is concemed with a respective event. Under these circumstances, complexities may arise whenever an event combination is significant, however, in practice, it is likely that the majority of events will in some way affect the context in which other events occur, such as multifunction buttons. Thus, many functions are dependent upon specific combinational events.

In typical microcontroller instructions, each event triggers a sequence of tests that examine the status of registers or memory values, in order to determine which of several functions is required in response to that event. In terms of operations, this may appear to be the optimum solution, however, the effort required to generate new instruction code for responding to each event in this way substantially increases the time required to encode new functions, even when these functions are only a minor addition to those that already exist in the software library.

Thus, the invention allows more design work to be implemented at the generic family type level by allowing data queues to be defined within memory that are relevant to the family as a whole. Thereafter, modifications in order to provide particular levels of functionality at the species or family member level is reduced to that of making particular selections within the environment already configured by the data queues of the event bus.

In a preferred embodiment, the data queues are defined dynamically in randomly addressable storage, possibly by means of linked lists.

In a preferred embodiment, the data queues receive event data from a plurality of event data generating means. Each of the queues may include a first-in-first-out buffer for event data and means for recording details of sub-processes interested in receiving data from the respective queue in prioritized order.

In a preferred embodiment, the sub-processes are selectively enabled so that it may or may not receive event data from a queue.

The invention will now be described by way of example only with reference to the accompanying drawings, in which:
Figure 1 shows a mobile telephone with internal circuitry including a microcontroller subsystem and a digital signal processor subsystem;
Figure 2 illustrates the arrangement of the microcontroller subsystem and the digital signal processor subsystem of the telephone illustrated in Figure 1;
Figure 3 shows a photocopier with intemal circuitry including a microcontroller;
Figure 4 shows a diagrammatic representation of a microcontroller based control system;
Figure 5 illustrates a hierarchy for embedded instructions including a platform operating system, product generic instructions and product specific selection instructions;
Figure 6 illustrates a typical applet for receiving event data, including a plurality of classified functions;
Figure 7 illustrates structures set up in memory in response to product generic instructions identified in Figure 5, including the establishment of dynamic data queues;
Figure 8 details a dynamic data queue of the type illustrated in Figure 7; and
Figure 9 illustrates the operation of executable instructions for reading data from said dynamic data queues and supplying data to processing applets in accordance with an event bus configuration.

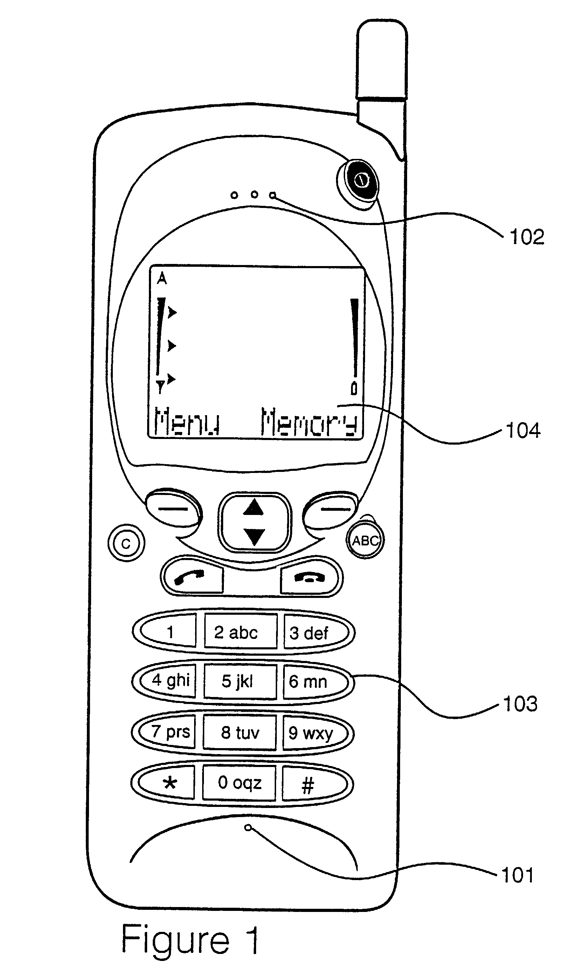

A mobile telephone is shown in Figure 1, having a mouthpiece microphone 101 and an earpiece loudspeaker 102. Conventional signalling buttons 103 are provided, enabling telephone numbers to be dialled and supplementary telephony services to be effected. A liquid crystal display 104 provides a visual display to an operator, arranged to display selected telephone numbers and to provide indications of other operating characteristics.

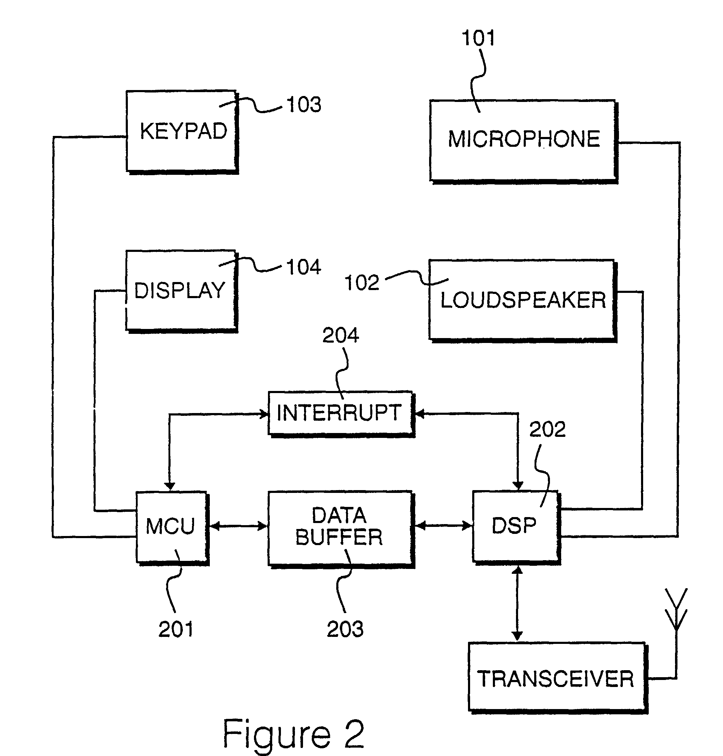

The internal circuitry for the telephone shown in Figure 1 is shown diagrammatically in Figure 2, with similar references being given to similar components. The keypad 103 and the display 104 operate under the control of a microcontroller subsystem (MCU) 201. The microcontroller subsystem 201 is responsible for the overall operation of the telephone and is particularly important when overseeing signalling operations and controlling operating characteristics, such as effecting frequency modifications when operation is switched between cells. The microcontroller subsystem is also interfaced to a digital signal processor subsystem 202, for the processing of real-time digital speech signals. The DSP sub system 202 receives signals from the microphone 101 and supplies signals to the loudspeaker 102. In addition, a sub system 202 communicates with a transceiver 205, that is in tum connected to an antenna 206.

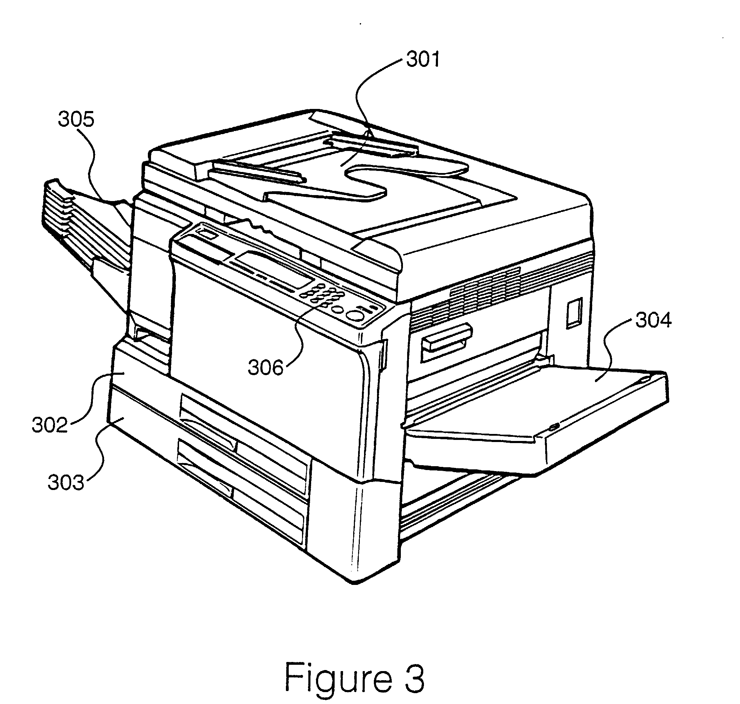

A photocopying device is shown in Figure 3 arranged to make plain paper copies in response to manual input instructions. Original copies are supplied to the machine via a paper feeder 301, plain paper is delivered from paper tray 302, 303 or 304 and photocopies are supplied to collating trays 305. The photocopying device represents one member of a family of related devices ranging in size, complexity and price from relatively modest desk-top units to large office systems. The level of functionality provided by these devices increases up the range but the family use a generic control processor, given that much of the functionality remains the same with additional features being included in the more advanced units.

The machine responds to operator instructions defined by a key pad 306. In response to these input instructions selections are made concerning paper size, input tray, number of copies and type of collation etc. In more advanced machines, it may be possible to perform double sided copying or copying from text books, effectively converting an A3 page down to two A4 pages say.

The mobile telephone showed in Figure 1 and the photocopier shown in Figure 3 represent systems that may be controlled by a microprocessor or microcontroller in response to program instructions.

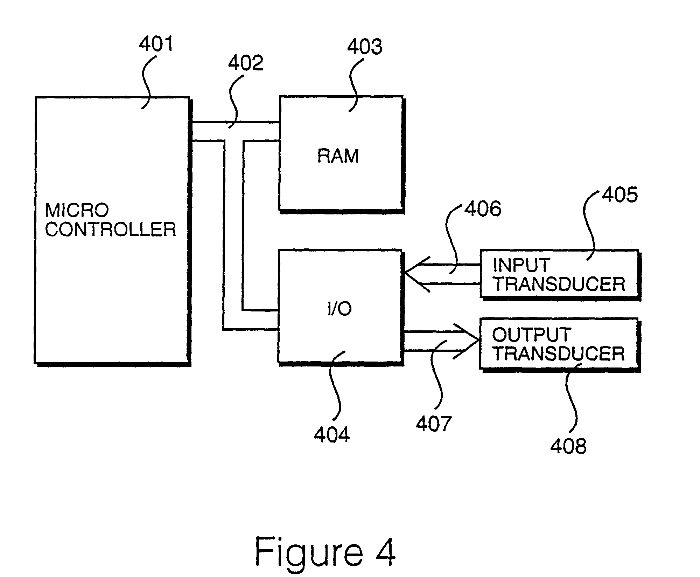

A diagrammatic representation of a microcontroller based control system is shown in Figure 4. This microprocessor environment is substantially similar in both the mobile telephone shown in Figures 1 and 2 and in the photocopier shown in Figure 3. A central processing unit or micro controller 401 includes a program counter that is arranged to sequentially generate address signals on a bus 402 for application to a memory device 403. The bus 402 identifies specific addressable memory locations within the memory device 403 such that, after being addressed in this way, locations may be written to or read from the memory device. When instructions are being read from memory, a memory location is addressed via the bus 402 resulting in an instruction being read from the memory, with the resulting instruction word being supplied to the processor 401.

The system also includes an input/output device 404, such that input signals may be received from input transducers 405 and supplied to the I/O circuit 404 via input lines 406. Similarly, the I/O circuit 404 is arranged to supply output signals over output lines 407 to output transducers 408.

In the mobile phone system shown in Figure 1, input signals would be received by manual operation of keys 103, or in response to signals received via an antenna system, possibly via the DSP subsystem 202. Output signals generated by the micro controller would result in control signals being supplied to the DSP subsystem 202 or for signals to be supplied to the visual display device 104 or to the loudspeaker 102. Similarly, in the photocopier system shown in Figure 3, input signals would be generated by manual operation of the keypad 305 with output signals being required to adjust mechanical components so as to control the operation of the device. In both systems, input signals are also generated internally, representing power low conditions or paper out conditions for example.

The microprocessor subsystem shown in Figure 4 represents an embedded system, of the type found in mobile telephones and photocopiers etc and as such the overall functionality is specified by the combination of the hardware platform with the operating instructions implemented by that platform. The intelligence of the system is contained within internal logic, defined by program instructions.

Both the mobile telephone shown in Figure 1 and the photocopier shown in Figure 3 represent examples of devices where there is a product genus with a plurality of species products that are members of that genus. Thus, for example, a first mobile telephone within the genus may only perform a very basic level of functionality, allowing telephone calls to be received and outgoing telephone calls to be made with very few additional features. A next model may include a memory for storing telephone numbers and a next model may include circuitry for conserving battery power, for example. Further examples of the range may include additional features for improving the operationality of the device and if such functionality is required, customers would tend not to object to paying additional sums of money to obtain higher value species products. However, although examples higher up the range would include additional features, they would still tend to include all of the lower level features contained in the less expensive species examples. Similarly, with photocopiers, examples capable of performing many advanced features, such a double sided copying, would still include the lower level features, such as input paper selection and size reduction.

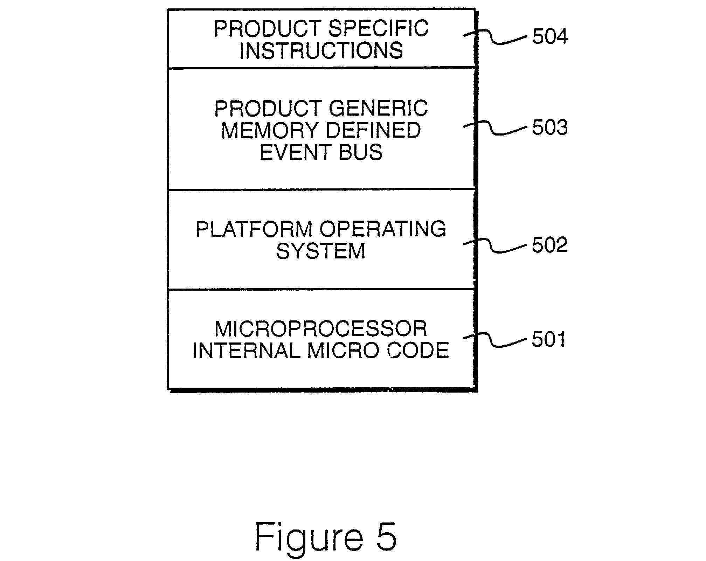

The fact that a plurality of species devices are derived from a common genus is exploited to facilitate the generation of an application program. As illustrated in Figure 5, instructions executed by the processor 501 may be considered as being constructed from a hierarchy. Firstly, the microcontroller 401 includes its own internal micro code, illustrated as layer 501. The internal micro code controls operations within the microcontroller 401 and this in turn supports platform operating-system instructions 502, overseeing the basic operation of data transfer over the bus 402. In conventional embedded systems, product specific instructions defining an application would be supported by the platform operating system 502. However, in the present system, product generic instructions 503 are defined which create a plurality of data queues. These data queues are available to all species products within the genus and the embedded instructions for a species product are finalised by the inclusion of product specific instructions 504. Product specific instructions instruct the programmable device to examine said queues and to direct input signals to selected application sub-assembly objects, referred to as applets. The arrangement is such that the instructions are created with a predefined structure so as to facilitate the creation of a family of species products within the genus defined by this structure and to substantially enhance the ability to include new features defined by modified species instructions 504, without requiring the whole of the application to be redefined.

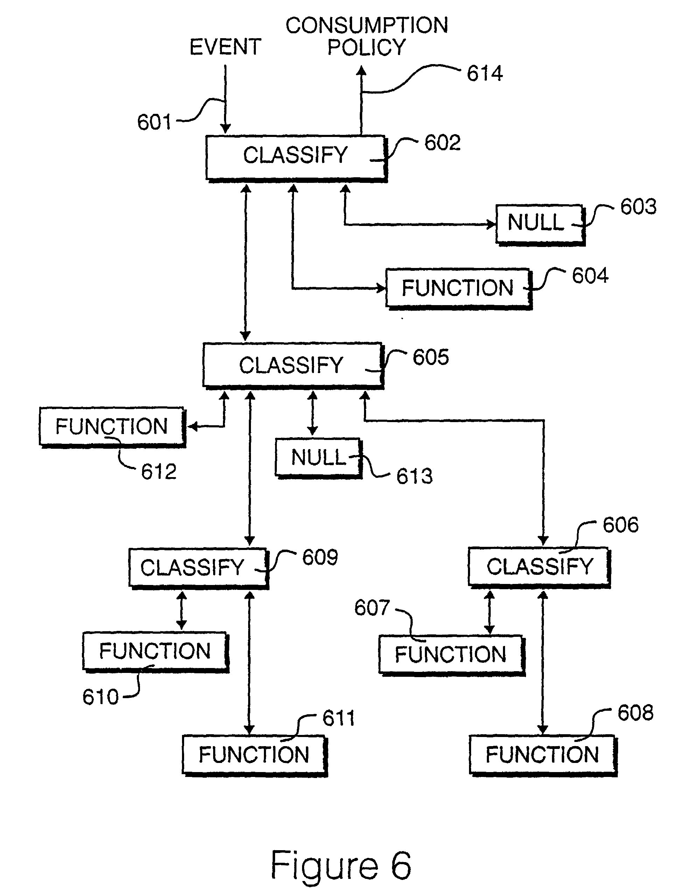

The structure of a typical applet is illustrated in Figure 6. In an object-orientated environment, the applet may be considered as an object consisting of a collection of executable functions arranged to be called within the object and to receive data from and supply data to associated objects. Thus, the applet includes functions, null entries, effectively representing the absence of a function, and classification nodes arranged to direct events to functions within the structure. The arrangement of functions shown in Figure 6 is merely an example and the actual topology of the applet would be dictated by the functionality required. Similarly, the particular nature of the functions will depend upon the specific requirements of the applet.

Input event data are supplied over an input channel 601, to a classification node 602. From this node it is possible for the data to be supplied to a null function 603, an operational function 604 or to a further level of classification via a further classification node 605. From classification node 605 it is possible for an additional level of classification to be provided by a third classification node 606, which in tum may direct the input data to a function 607 or to a function 608. Classification node 605 may also direct an input event to a lower level of classification via classification node 609, that may in tum direct the data to an operational function 610 or a further operational function 611. Event data supplied to node 605 may also be directed to a further operational function 612 or to a further null function 613.

When an input event is supplied to an applet the applet may respond to this input event in basically one of four ways. Firstly, the event may be consumed to an extent that the event data is no longer available for it to be operated upon by an other applets within the system. Alternatively, the event data may be used within the applet without being finally consumed in that the event data remains available for other applets to make use of it. These possibilities, that is to say whether an input event is available for subsequent consumption, is identified by data being returned back over channel 614 in the form of consumption policy data. Thus, the consumption policy data may identify the event as being finally consumed and therefore no longer available for other applets or, alternatively, it may retum a consumption policy to the effect that the input event data should remain available for being supplied to other applets. Thus, these two possibilities, representing the data being used by the applet and returning a positive or a negative consumption policy, represent the first two options out of the aforesaid four possible options.

In addition to the aforesaid two possible options, it is possible for the input event to be directed to a null function, such as null function 603 or 613. When this occurs no action is taken by the applet itself and a negative consumption policy is returned to the effect that the event data has not been consumed by the applet and may therefore be directed to other applets within the system. Fourthly, there is a more sophisticated variant upon the input event data being supplied to a function, acted upon and returned with a negative consumption policy. In addition to merely returning a negative consumption policy, it is possible for a function, such as function 604, to return additional data to be included with the input event data for distribution to other applets within the system. Thus, the four possible event consumption strategies may be summarised as follows:
. The event is supplied to a null function and a negative consumption policy is returned.
. The input event is supplied to an active function to provide an argument for that function, allowing the function to be executed but without finally consuming the input event data, resulting in a negative consumption policy being returned such that the event data may be used elsewhere.
. The event is supplied to an active function, such as function 612, where the input event data provides an argument for the function, resulting in the function being executed and the input event data being finally consumed; resulting in a positive consumption policy being returned.
. The input event data is supplied to an active function arranged to append data to the input event, resulting in the appended data being returned along with a negative consumption policy.

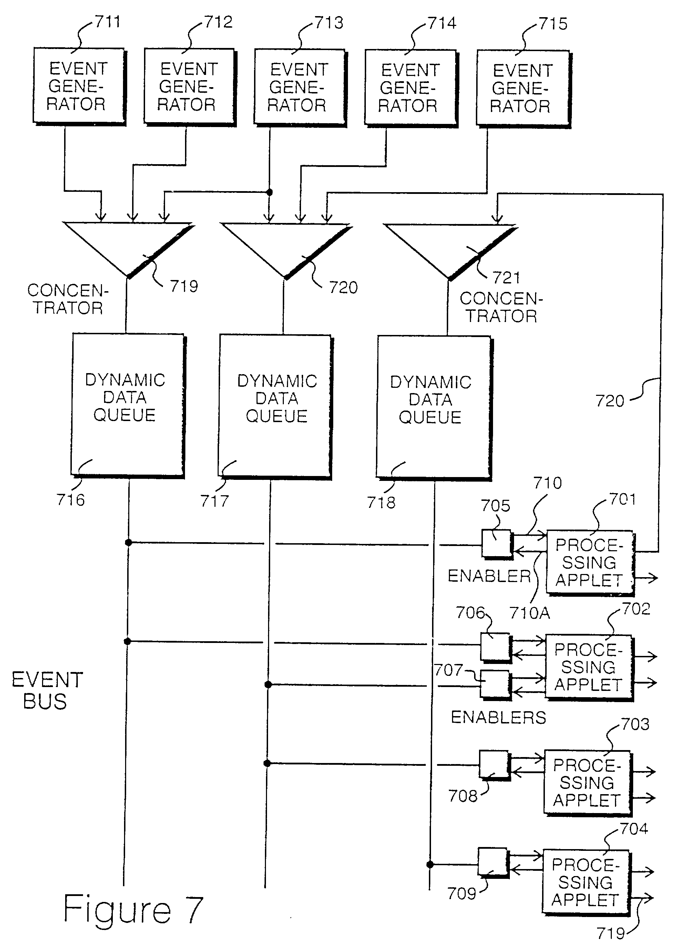

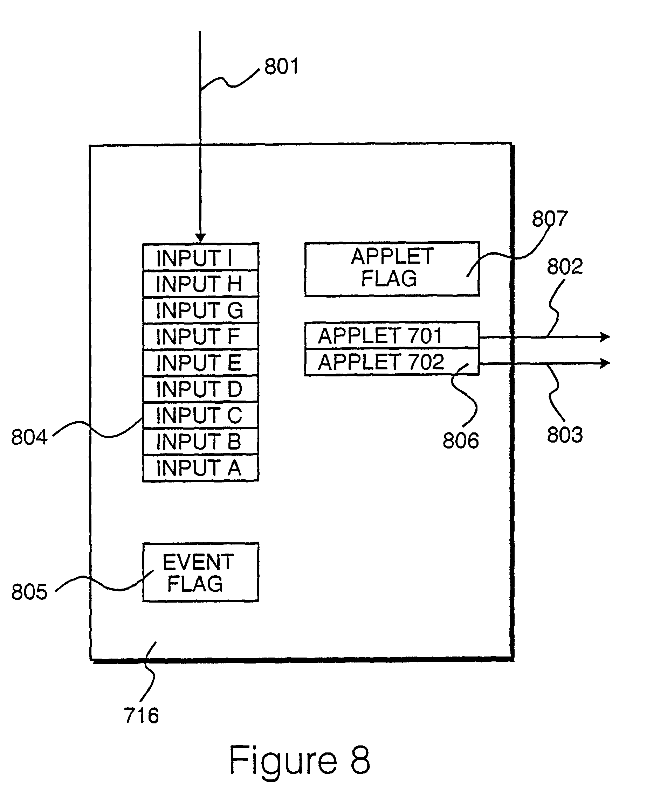

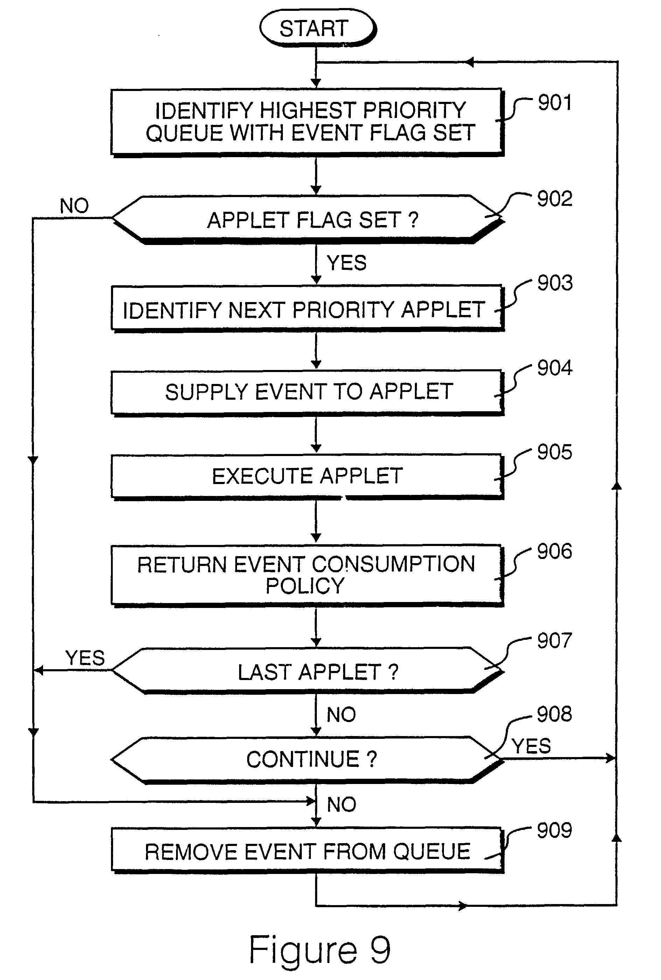

An environment has been developed in which event data is generated and event consuming applets await selected input data events to be supplied thereto. In the embodiment, a structure for selectively directing input event data to the appropriate event consuming applet is structured within the product generic instructions 503 illustrated in Figure 5. In addition, these instructions also define further levels of selectivity, in the form of enablers, that are in turn configured by the product's specific instructions 504. The product generic instructions effectively define processor operations and dynamic memory allocations within the processor environment. A static representation of memory configurations is illustrated in Figures 7 and 8, and the dynamic operation of this representation will be defined with reference to Figure 9.

In the example shown in Figure 7, the processing environment is provided with four processing applets 701, 702, 703 and 704, having structures substantially similar to that shown in Figure 6. Event data is supplied to a processing applet via enablers 705, 706, 707, 708 and 709 via an event line 710, similar to communications channel 601, shown in Figure 6. Similarly, consumption policy data is returned from the processing applet to the respective enabler via a return channel 710A, similar to channel 614 of Figure 6.

In the operational apparatus, such as the telephone shown in Figure 1 or the photocopier shown in Figure 3 etc real events are generated, possibly in response to an operator pressing buttons or in response to internal detectors or in response to external signals. These real events are converted into electrical signals which are in turn digitised to provide event data that may be processed within the processing environment illustrated in Figure 4. In the representation shown in Figure 7, input event data are shown as being generated by event generators 711, 712, 713, 714 and 715. Thus, event generator 711 may generate input events when manual buttons are pressed and event generator 712 may generate event data when intemal detectors detect conditions of interest.

Within the associated memory locations, data queues are defined dynamically in the form of linked lists. A linked list allows elements within a data queue to be distributed over regions of memory with each individual portion pointing to the next portion and possibly the previous portion, making up the list. As a list expands or contracts, appropriate modifications are made to the pointers thereby allowing the available data space to be used efficiently as and when data event storage is required.

A plurality of dynamic data queues are provided with three data queues 716, 717 and 718 being shown in Figure 7, each implemented as a linked list. The number of data queues provided within an implementation is optimised, with a minimum number of data queues existing so as to make the most efficient use of the available memory space; each individual dynamic data queue being responsible for marginally increasing the overall memory requirement. However, by providing a plurality of data queues, each arranged to supply input events to a plurality of processing applets, it is possible to provide two stages of selectivity and thereby significantly enhance and optimise system operation. The structure illustrated in Figure 7 allows selections to be implemented as the data is being supplied to a data queue and, in addition, it provides a level of selection to be made when data is read out of a data queue and supplied to a processing applet.

The number of data queues within the environment is optimised to provide efficient use of the available memory, therefore it is not necessary to provide a unique data queue for each specific event generator. In some circumstances, given the nature of the functionality required, an event generator may have its own specific data queue but under other circumstances it is possible for input event data generated by a plurality of event generators to be supplied to the same dynamic data queue via a concentrating operation.

Input event data produced by event generators 711, 712 and 713 are supplied to dynamic data queue 716 via a concentrator 719. Similarly, input event data generated by event generators 713, 714 and 715 are supplied to dynamic data queue 717 via a concentrator 720; event data from event generators 713 being supplied to data queues 716 and 717 via concentrators 719 and 720 respectively.

Thus, concentrators 719 and 720 provide access to dynamic data queues for all of the event generators shown. However, the system is also capable of considering the output from a processing applet as a new input event. For the purposes of illustration, each processing applet is provided with two output channels, such as channel 719 arranged to convey output data from processing applet 704. However, output line 720 from processing applet 701 is treated as a new input event and supplied to the input of dynamic data queue 718 via concentrator 721.

Dynamic data queue 716, substantially similar to the other queues in the system, is detailed in Figure 8. Event data from concentrator 719 is supplied to the queue on input channel 801, with output event data for enabler 705 being supplied on channel 802 and event data for enabler 706 being provided over channel 803. The main component of the dynamic data queue is a dynamic first-in-first-out (FIFO) buffer 804, established within memory locations as a linked list as previously described. In the example shown, nine input data events have been buffered, identified as input A, input B, input C, input D, input E, input F, input G, input H and input I.

The queue includes an input flag 805 that is set when input events have been supplied and are being stored in the buffer 804. A second buffer 806 stores a list of applets that have been recorded as being interested in receiving input event data from input generators. Thus, in this example the applet buffer 806 stores an indication of applet 701 and an indication of applet 702, reflecting the topology illustrated in Figure 7. Furthermore, an applet flag 807 is set when applet indications are present in the applet buffer which, in the queue illustrated in Figure 8, will have been set through the presence of two applet indications being so present. The ordering of applets within the applet buffer 806 is also important, given that applets indicated higher up the list would be given higher priority than those lower down the list. Thus, in the example shown, event data will be supplied to applet 701 in preference to the data being supplied to applet 702. If data is consumed within applet 701 the data will no longer remain available for application to applet 702. Alternatively, if a negative consumption policy is returned after data has been supplied to applet 701, this data will remain available for application to applet 702. Furthermore, it is possible for data generated by applet 701 to be returned for application to applet 702 in combination with input event data.

Enablers 705 to 708 are programmable in response to the product specific instructions 504. The enabler allows the processing applet to be effectively enabled or disabled, which in tum affects the way in which input events are treated when dispatched by a data dynamic queue. When placed in the disabled state, it is not possible for input events to be supplied to a processing applet. The input event is received by the enabler resulting in data identifying a negative consumption policy being returned back to the data dynamic queue. Thus, under these circumstances, it would be possible for the data queue to supply the event data to processing applets of lower priority, provided that their respective enabler is enabled. When placed in its enabled condition, an enabler effectively becomes transparent, thereby ensuring that event data from a data queue is received at the relevant processing applet. In addition, the enabler also ensures that consumption policy data generated by a processing applet is returned to the appropriate data queue, so that the data queue itself may determine whether an event is to be deleted from buffer 804 or directed to the next prioritized processing applet, in accordance with the specified consumption policy.

Operations performed within the structure illustrated in Figure 7 may be generalised by considering the processing of event data by a plurality of sub-processes, identified as processing applets 701 etc. The dynamic data queues are defined within memory and are considered to have priority rankings thus, for example, queue 716 may be considered as having higher priority over queue 717 which in turn may be considered as having higher priority over queue 718. This feature is important because it determines the order in which events are processed so as to provide a quasi-concurrent environment.

The event generators generate events which are directed to the data queues via the concentrators. The concentrators allow selections to be made as to which event will be supplied to which specific data queues. Thus, the direction of event data to particular queues will effectively determine the priorities given to the processing of particular events. The queues are examined to identify the highest priority queue with buffered event data waiting and this data is then supplied to the highest priority sub-process. The priority of the sub-processes is defined by a applet buffer such that, in addition to the order of the events themselves being prioritized, the order in which these events are subsequently supplied to sub-processes is also prioritized. Again, this feature is important in order to ensure quasi-concurrency.

The platform is specifically advantageous when producing a range of products and an important feature allowing product specific programming is the setting of the enablers 705 to 709. Thus, depending upon the condition of the enablers, event data may or may not be supplied to a subscribing processing applet.

At the processing applet or sub-process the event data is acted upon and then a consumption policy is returned back to the dynamic data queue. This consumption policy may state that the event data has been consumed and therefore no longer remains available for being supplied to another sub-process. Alternatively, the consumption policy may say that the data remains available and may therefore be supplied to subsequent processes. Thus, referring to Figure 8, if an event data has been supplied to the first priority applet 701 and a consumption policy is returned to the effect that the data remains available, the data will subsequently be supplied to applet 702. However, it is important to understand that while this process has taken place, further data may have been received at the dynamic data queues. Thus, a re-examination is performed upon all of the queues so as to process a higher priority event, if such an event has been received or to continue processing the previously supplied event if no such higher priority data has been received.

Operation of the structure shown in Figure 7 and detailed in Figure 8 will be described with reference to procedures identified in Figure 9. The structures are modified dynamically in accordance with instructions that may be identified as a "dispatcher". The dispatcher exists with other instructions within the environment and a call is made to the dispatcher instructions using conventional techniques, indicated by the start box in Figure 9.

The dispatcher is aware of the presence of the data queues and includes a list identifying the queues in priority order. At step 901 the highest priority queue, having it's respective event flag 805 set, is identified and at step 902 a question is asked as to whether it's respective applet flag 807 has been set. If this question is answered in the negative, control is directed to step 909, the event is removed from the queue, whereafter control is returned to step 901 allowing the next highest priority queue to be selected. Alternatively, if the question asked at step 902 is answered in the affirmative the next highest priority applet is identified at step 903.

At step 904 the event data is supplied to the applet identified at step 903 and at step 905 the applet is executed.

In response to the applet instructions being executed at step 905, an event consumption policy is generated, which is returned at step 906. Thus, in response to this event consumption policy, the event data may be treated as being totally consumed by the applet or, alternatively, it may remain available for application to subsequent applets.

At step 907 a question is asked as to whether the last applet has been considered and when answered in the affirmative control is returned to step 909. Alternatively, if a question asked at step 907 is answered in the negative, a question is asked as to whether the process should continue and when answered in the affirmative control is returned to step 901, allowing the process to continue for the next highest priority queue.

Typically, an input event will consist of an input byte having a code attached thereto to identify the nature of the data, which will in turn be used to identify functions within applets that have identified an interest in receiving data of the specified type. However, the system may be extended to accommodate input data having substantially more bytes of information, effectively establishing a communications network.

As previously stated, it is possible for a function within an applet to effectively append additional data to event data, with the additional data being supplied back to the originating data queue along with negative consumption policy data. In this way, the original event data, in combination with the additional data, will be supplied to the next applet in the applet priority list.

This mechanism may be exploited within operational environments such as the environment provided by a mobile telephone system.

In mobile telephone systems a telephone call may be originated by a user pressing a button identified as "send". The pressing of this button initiates a radio communication link and results in data being supplied to a base station identifying a telephone number to be contacted. Prior to the send button being activated, a user may enter a telephone number, amend and correct a telephone number or select telephone numbers from storage. Thus, a first applet may attend to number handling, allowing amendments and deletions to be made etc while a second applet may be responsible for establishing a call after the send button has been selected.

Under these conditions, number information may be supplied to a first applet allowing editing operations to be performed with numbers displayed on the liquid crystal display 104. As numbers are selected, data representing these numbers are supplied as input events and are received by the number-handling applet, identified as the applet of highest priority in the appropriate event queue. This applet may allow a user to select numbers and make deletions with a buffer retaining the present preferred selection, as displayed on the display unit. Eventually, the displayed numbers will be considered correct by the user who will then activate the send button.

Activation of the send button will generate an input event and event data will be directed to the first priority applet. The first priority applet will identify the send button as being something different from the numerical buttons and will be programmed to operate accordingly. In particular, data events representing numbers will be consumed by the applet and will not remain in the queue for distribution to other applets. However, when the send event is received such an event is not consumed by the applet and an indication to this effect, in the form of negative consumption policy data, will be returned back to the data queue, thereby allowing the send event to be directed to the next prioritized applet. The next prioritized applet may be the applet concemed with establishing a call to the base station, a process activated by reception of the send instruction. However, in order to establish this connection, it is necessary for the communications applet to receive data defining the sequence of numbers that have been selected. Thus, this information is transferred from the first applet to the second applet in the form of an additional data string which is returned back to the originating queue along with the negative consumption data.

## Claims

1. A method of processing event data, wherein said data is buffered and sequentially processed by a plurality of sub-processes; characterised by
defining a plurality of prioritized data queues (716-718), defining which input event data is supplied to which of said prioritized queues and defining which prioritized sub-processes receive outputs from said queues;
examining said queues to identify the highest priority queue with buffered event data therein;
supplying said identified event data to the highest priority sub-process (701);
returning a consumption policy from said sub-process identifying whether said supplied event data may be re-supplied to the next prioritized sub-process(702); and
re-examining said queues so as to process a new higher priority event or to continue processing said previously supplied event.

2. A method according to claim 1, wherein said data queues are defined dynamically in randomly addressable storage.

3. A method according to claim 1 or claim 2, wherein said data queues receive event data from a plurality of event data generating means.

4. A method according to any of claims 1 to 3, wherein each of said queues includes a first-in-first-out buffer for event data and means for recording details of sub-processes interested in receiving data from the respective queue in prioritized order.

5. A method according to any of claims 1 to 4, wherein a sub-process is selectively enabled so that it may or may not receive event data from a queue.

6. Event data processing apparatus, including buffer means for buffering said data and a plurality of sub-processing means for sequentially processing said data; characterized by
defining means configured to define a plurality of prioritized data queues (716-718), input event data priorities and output event data priorities;
despatching means arranged to examine said queues to identify the highest priority queue with buffered event data therein;
supplying means for supplying said identified event data to the highest priority defined sub-process (701);
returning means for returning a consumption policy from said process identifying whether supplied event data may be re-supplied to the next priotized sub-process (702); and
re-examining means for a re-examing said queues so as to process a higher priority event or to continue processing said previously supplied event.

7. Processing apparatus according to claim 6, including randomly addressable storage and means for dynamically defining said data queues within said storage.

8. Apparatus according to claim 6 or claim 7, including a plurality of event data generating means (711-715) and means (719) for directing event data from more than one of said event data generating means to one of said queues (716).

9. Apparatus according to any of claims 6 to 8, wherein each of said queues includes a first-in-first-out buffer (804) for event data and means (806) for recording details of sub-processes interested in receiving data from its respective queue in prioritized order.

10. Apparatus according to any of claims 6 to 9, including enabling means (705) configured to selectively enable the transmission of event data to its respective sub-process.

## Patentansprüche

1. Verfahren zum Verarbeiten von Ereignisdaten, bei dem diese Daten gepuffert und sequentiell durch mehrere Unterprozesse verarbeitet werden, **gekennzeichnet durch**:
- Definieren mehrerer mit Priorität versehener Datenwarteschlangen (716 - 718), Definieren, welche Eingangsereignisdaten welcher der mit Priorität versehenen Warteschlangen zugeführt werden, und Definieren, welche mit Priorität versehenen Unterprozesse die Ausgangsdaten der Warteschlangen empfangen;
- Untersuchen der Warteschlangen, um die Warteschlange höchster Priorität mit darin gepufferten Ereignisdaten zu identifizieren;
- Liefern der identifizierten Ereignisdaten an den Unterprozess höchster Priorität (701);
- Rückliefern einer Ausgeschöpftanzeige vom Unterprozess, die anzeigt, ob die gelieferten Ereignisdaten neu an den Unterprozess nächster Priorität zu liefern sind (702); und
- erneutes Untersuchen der warteschlangen, um ein neues Ereignis höherer Priorität zu verarbeiten oder mit der Verarbeitung des bereits gelieferten Ereignisses fortzufahren.

2. Verfahren nach Anspruch 1, bei dem die Datenwarteschlangen dynamisch in einem Direktzugriffsspeicher definiert werden.

3. Verfahren nach Anspruch 1 oder Anspruch 2, bei dem die Datenwarteschlangen Ereignisdaten von mehreren Ereignisdaten-Erzeugniseinrichtungen empfangen.

4. Verfahren nach einem der Ansprüche 1 bis 3, bei dem jede der Warteschlangen einen FIFO-Puffer für Ereignisdaten und eine Einrichtung zum Aufzeichnen von Einzelheiten von Unterprozessen, wie beim Empfangen von Daten von der jeweiligen Warteschlange in Prioritätsreihenfolge von Interesse, aufweist.

5. Verfahren nach einem der Ansprüche 1 bis 4, bei dem ein Unterprozess selektiv so aktiviert wird, dass er Ereignisdaten von einer Warteschlange empfangen oder nicht empfangen kann.

6. Vorrichtung zum Verarbeiten von Ereignisdaten, mit einer Puffereinrichtung zum Puffern der Daten sowie mit mehreren Unterverarbeitungseinrichtungen zum sequentiellen Verarbeiten der Daten;
- eine Definiereinrichtung, die so ausgebildet ist, dass sie mehrere mit Priorität versehene Datenwarteschlangen (716 - 718), Eingangsereignisdaten-Priorität und Ausgangsereignisdaten-Prioritäten definiert;
- eine Zuteilungseinrichtung, die so ausgebildet ist, dass sie Warteschlangen, um die Warteschlange höchster Priorität mit darin gepufferten Ereignisdaten zu identifizieren, untersucht;
- eine Liefereinrichtung zum Liefern der identifizierten Ereignisdaten an den Unterprozess höchster Priorität (701);
- eine Rückliefereinrichtung zum Rückliefern einer Ausgeschöpftanzeige vom Unterprozess, die anzeigt, ob die gelieferten Ereignisdaten neu an den Unterprozess nächster Priorität zu liefern sind (702); und
- eine Neuuntersuchungseinrichtung zum erneuten Untersuchen der Warteschlangen, um ein neues Ereignis höherer Priorität zu verarbeiten oder mit der Verarbeitung des bereits gelieferten Ereignisses fortzufahren.

7. Verarbeitungsvorrichtung nach Anspruch 6, mit einem Direktzugriffsspeicher und einer Einrichtung zum dynamischen Definieren der Datenwarteschlangen innerhalb dieses Speichers.

8. Vorrichtung nach Anspruch 6 oder Anspruch 7, mit mehreren Ereignisdaten-Erzeugniseinrichtungen (711 - 715) und einer Einrichtung (719) zum Lenken von Ereignisdaten von mehr als einer der Ereignisdaten-Erzeugniseinrichtungen zu einer der Warteschlangen (716).

9. Vorrichtung nach einem der Ansprüche 6 bis 8, bei der jede der Warteschlangen einen FIFO-Puffer für Ereignisdaten und eine Einrichtung zum Aufzeichnen von Einzelheiten von Unterprozessen, wie beim Empfangen von Daten von der jeweiligen Warteschlange in Prioritätsreihenfolge von Interesse, aufweist.

10. Vorrichtung nach einem der Ansprüche 6 bis 9, mit einer Aktivierungseinrichtung (705), die so aufgebaut ist, dass sie die Übertragung von Ereignisdaten an ihren jeweiligen Unterprozess selektiv aktiviert.

## Revendications

1. Procédé de traitement de données d'événement dans lequel lesdites données sont placées dans une mémoire tampon et sont traitées séquentiellement par une pluralité de sous-traitements ;
caractérisé par :
définir une pluralité de files d'attente de données prioritaires (716 à 718), définissant quelles données d'événement en entrée sont délivrées auquelles dudites files d'attente prioritaires et définissant quels sous-traitements prioritaires reçoivent les sorties provenant desdites files d'attente ;
examiner lesdites files d'attente pour identifier la file d'attente de priorité la plus élevée, les données d'événement étant mémorisées temporairement dans celle-ci ;
délivrer lesdites données d'événement identifiées au sous-traitement de priorité le plus élevé (701) ;
renvoyer un ordre d'utilisation à partir dudit sous-traitement identifiant que lesdites données d'événement délivrées peuvent être redélivrées au sous-traitement ayant la priorité suivante (702) ; et
réexaminer lesdites files d'attente de façon à traiter un nouvel événement de priorité plus élevée ou continuer à traiter ledit événement précédemment délivré.

2. Procédé selon la revendication 1, dans lequel lesdites files d'attente de données sont définies dynamiquement dans une mémoire adressable directe.

3. Procédé selon la revendication 1 ou la revendication 2, dans lequel lesdites files d'attente de données reçoivent des données d'événement à partir d'une pluralité de moyens de génération de données d'événement.

4. Procédé selon l'une quelconque des revendications 1 à 3, dans lequel chacune desdites files d'attente inclut une mémoire tampon premier entré premier sorti pour les données d'événement et un moyen pour enregistrer les détails des sous-traitements concernés par de la réception des données à partir de la file d'attente respective selon l'ordre de priorité.

5. Procédé selon l'une quelconque des revendications 1 à 4, dans lequel un sous-traitement est sélectivement activé de sorte qu'il peut ou non recevoir les données d'événement à partir d'une file d'attente.

6. Dispositif de traitement de données d'événement, incluant un moyen de mémoire tampon pour mémoriser temporairement lesdites données et une pluralité de moyens de sous-traitement pour traiter séquentiellement lesdites données ; caractérisé par
un moyen de définition configuré pour définir une pluralité de files d'attente de données auxquelles on a affecté des priorités (716 à 718), des priorités de données d'événement en entrée et des priorités de données d'événement en sortie ;
un moyen de distribution conçu pour examiner lesdites files d'attente pour identifier la file d'attente de priorité la plus élevée, les données d'événement étant mises en mémoire tampon dans celle-ci ;
un moyen délivrance pour délivrer lesdites données d'événement identifiées au sous-traitement dont on a défini qu'il a la priorité la plus élevée (701) ;
un moyen de renvoi pour renvoyer un ordre d'utilisation à partir dudit traitement identifiant si les données d'événement délivrées peuvent être redélivrer au sous-traitement ayant la priorité suivante (702) ; et
un moyen de réexamen pour réexaminer lesdites files d'attente de façon à traiter un événement de priorité plus élevée ou continuer les traitements dudit événement précédemment délivré.

7. Dispositif de traitement selon la revendication 6, incluant une mémoire adressable directement et un moyen pour définir dynamiquement lesdites files d'attente de données à l'intérieur de ladite mémoire.

8. Dispositif selon la revendication 6 ou la revendication 7, incluant une pluralité de moyens de génération de données d'événement (711 à 715) et un moyen (719) pour diriger les données d'événement provenant de plus qu'un desdits moyens de génération de données d'événement vers une desdites files d'attente (716).

9. Dispositif selon l'une quelconque des revendications 6 à 8, dans lequel chacune desdites files d'attente inclut une mémoire tampon premier entré premier sorti (804) pour les données d'événement et un moyen (806) pour enregistrer les détails des sous-traitements concernés par de la réception de données à partir de sa file d'attente respective selon l'ordre des priorités.

10. Dispositif selon l'une quelconque des revendications 6 à 9, incluant un moyen d'activation (705) configuré pour activer sélectivement la transmission des données d'événement à son sous-traitement respectif.
